# DEMANDE DE BREVET EUROPEEN

(11) **EP 2 095 983 A1**
(43) Date de publication de la demande: **02.09.2009**
(21) Numéro de dépôt: 09350001.5
(22) Date de dépôt: 04.02.2009
(51) Int. Cl.: B60J 7/14, B62D 25/08

(54) **Véhicule renforcé**

(30) Priorité: 29.02.2008 FR 0801119
(71) Demandeur: Heuliez, 79140 Cerizay (FR)
(72) Inventeur: Guillez, Jean Marc, 79140 Cirières (FR)
(74) Mandataire: Tournel, Jean Louis

(57) **Abrégé**

L'invention a pour objet un véhicule à toit rétractable dans un coffre comprenant, d'une part, un élément (2) de toit avant et un élément (3) de toit arrière, cet élément (3) de toit arrière comprenant lui même une partie (3A) centrale et deux éléments latéraux (3B) et, d'autre part, une structure (7) à résistance en torsion séparant le volume du coffre de celui de l'habitacle et reliant des pieds latéraux (8) du véhicule, la structure à resistance étant une cloison épaisse creuse qui s'étend sensiblement depuis le plancher et présente des ouvertures latérales (5A,5B) traversées par une partie des éléments latéraux (3B) du toit lorsqu'il est en position rangé dans le coffre.

## Description

L'invention se rapporte à un véhicule à toit rétractable comportant une structure renforcée.

Les véhicules à toit rétractables sont de plus en plus prisés.

Sur ces véhicules, le toit occupe soit une position de service où il couvre l'habitacle soit une position rangée transformant ainsi le véhicule en un cabriolet.

Le coffre est destiné à recevoir le toit à l'état rangé et/ou les bagages.

Le principe de ces véhicules est donc de faire disparaitre le toit dans le coffre.

Les toits sont devenus de plus en plus complexe. Par exemple les toits les plus simples comportent un élément avant et un élément arrière chaque élément étant constitué d'un seul panneau.

Un toit plus évolué est connu du document EP 1 719 654 ou EP 1 711 361. L'élément avant du toit est toujours en une partie alors que l'élément de toit arrière comprend une partie centrale ( panneau) et deux éléments latéraux.

La présence de ces éléments latéraux peut avoir pour objet l'esthétique du véhicule mais surtout l'optimisation du rangement ou l'optimisation du déplacement pour ne pas interférer avec la tête des passagers ou la présence de partie en saillie dans le coffre.

Dans un tel véhicule, il faut donc se poser la question du rangement du toit tant sur l'aspect cinématique que sur l'aspect encombrement tout en tenant compte de l'esthétique.

Ces véhicules sont souvent dérivés de véhicules classiques pour limiter le coût.

La transformation d'un véhicule classique en cabriolet a des implications sur sa résistance.

En effet, sur les véhicules classiques, la résistance dépend du châssis mais le toit participe également à cette résistance.

Les véhicules à toit rétractable ont donc l'inconvénient, comme les cabriolets, que le véhicule ne peut bénéficier de la résistance du toit.

Outre cet inconvénient, le poids du toit rétractable est supérieur à un toit classique et cet ajout de poids doit être pris en compte.

Il est de ce fait connu de renforcer un véhicule à toit rétractable EP -A-1 741 617 avec une poutre transversale disposée entre les sièges arrières et le volume destiné au coffre .Cette poutre est disposés largement au dessus de plancher du véhicule

Sous cette poutre s'étend une simple feuille de tôle délimitant ainsi l'espace dédié au coffre et celui réservé aux occupants du véhicule. On améliore la résistance mais cela peut être amélioré.

Il faut également tenir compte que ce renforcement augmente le poids du véhicule et donc sa consommation.

Comme indiqué précédemment, le toit doit donc rentrer dans le volume réservé de ce coffre malheureusement dans ce coffre font généralement saillis les blocs des optiques arrières qui pénalisent le volume et la longueur disponible en ces zones latérales.

C'est une problématique de construction

L'invention vise un véhicule à toit rétractable qui optimise le rangement, la résistance ainsi que le poids.

A cet effet, l'invention a pour objet un véhicule à toit rétractable dans un coffre comprenant, d'une part, un élément de toit avant et un élément de toit arrière, cet élément de toit arrière comprenant lui même une partie centrale et deux éléments latéraux et, d'autre part, une structure à résistance améliorée en torsion séparant le volume du coffre de celui de l'habitacle et reliant des pieds latéraux du véhicule, ce véhicule étant **caractérisé en ce que** la structure améliorée est une cloison épaisse creuse qui s'étend sensiblement depuis le plancher et présente des ouvertures traversées par une partie des éléments latéraux du toit lorsqu'il est en position rangé dans le dit coffre.

L'invention sera bien comprise à l'aide de la description ci après faite à titre d'exemple non limitatif en regard du dessin qui représente schématiquement :
FIG 1 : Vue d'un véhicule en écorché où les sièges non pas été représentés

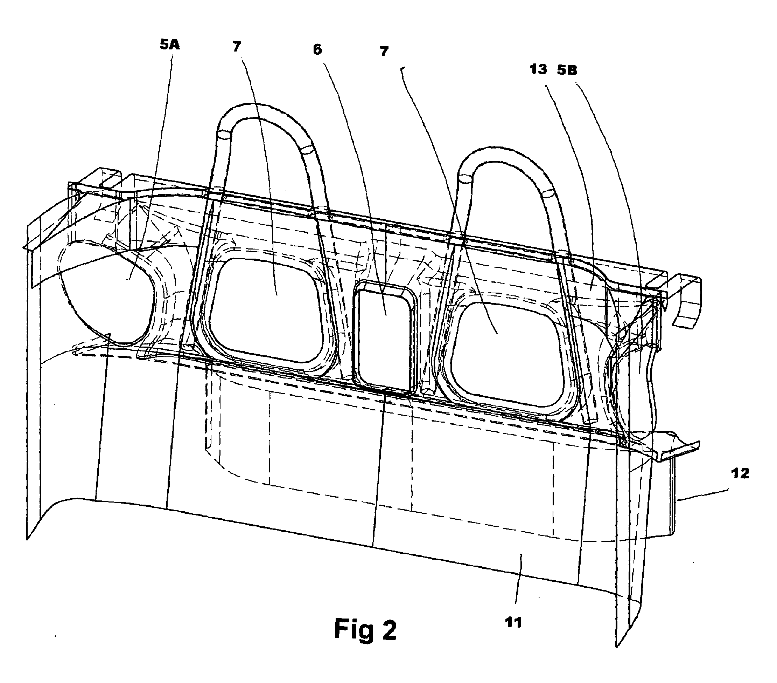

FIG 2 : la séparation entre l'habitacle et le coffre en perspective
FIG 3 : Vue de face de la séparation entre l'habitacle et le coffre ;
FIG 4 ; Coupe selon IV-IV de la figure 3
FIG 5 : Coupe selon V-V de la figure 3 ,
FIG 6 : Coupe selon VI-VI de la figure 3.
FIG 7 : Vue de coté de la séparation.
FIG 8 : Un exemple de toit à l'état couvrant l'habitacle
FIG 9 : Le toit de la figure 8 à l'état rangé.

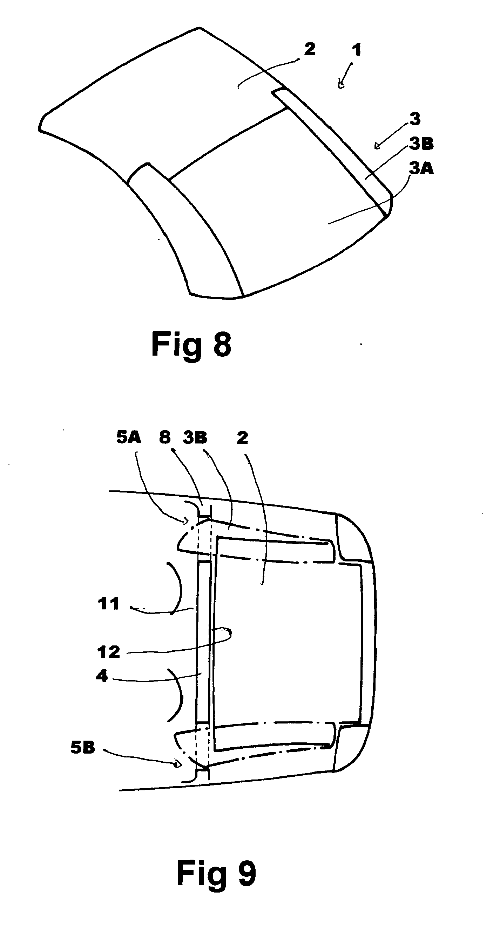

En se reportant au dessin, on voit en figure 8 et 9 un toit 1 rétractable destiné à équiper un véhicule. Ce toit se rétracte dans un coffre accessible via un couvercle.

Ce toit comprend un élément 2 de toit avant et un élément 3 de toit arrière, cet élément 3 de toit arrière comprenant lui même une partie 3A centrale ( ici sous forme d'un panneau) et deux éléments latéraux 3B.

On voit ici que les éléments latéraux empiètent sur l'élément de toit avant lorsque le toit est en position de service couvrant l'habitacle.

Un mécanisme permet de déplacer les différents éléments de toit et impose une cinématique particulière pour chaque partie.

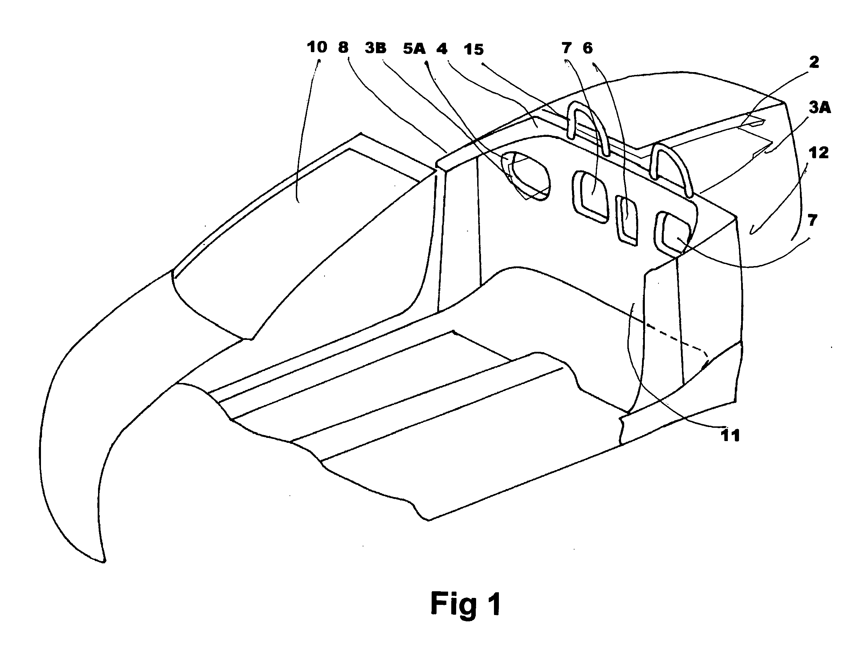

Ce toit équipe un véhicule sommairement reproduit en figure 1.

On y voit le pare-brise 10 et à l'arrière une structure 4 à résistance améliorée en torsion séparant le volume du coffre de celui de l'habitacle et reliant des pieds 8 latéraux du véhicule.

Cette structure 4 résistante est épaisse de l'ordre de cinq centimètres et constitue une séparation physique. Elle s'étend sur toute la largeur du véhicule et depuis sensiblement le plancher jusqu'à la hauteur de la ligne de caisse.

Pour le rangement du toit, la structure 4 améliorée présente des ouvertures 5A, 5B traversées par une partie des éléments latéraux 3B du toit lorsque le toit est en position rangé dans le coffre.

Ainsi lors du rangement de toit du type de celui décrit dans les documents EP 1 719 654 ou EP 1 711 361, les éléments latéraux vont pouvoir s'insérer dans les ouvertures du mur.

Ces ouvertures 5A, 5B destinées à recevoir les extrémités des éléments latéraux sont disposées au voisinage immédiat des parois latérales de la caisse.

On permet donc aux éléments latéraux de se ranger dans le coffre tout en évitant d'augmenter la longueur du coffre. La présence de ces ouvertures va en outre alléger la dite structure résistante.

Avec un toit du type décrit dans la demande Ep 1 711 361, les éléments latéraux sont introduits dans les ouvertures par décalage vers l'avant des dits éléments latéraux par rapport à la partie centrale 3A. Le mécanisme de manoeuvre de ces éléments latéraux prend appui sur au moins une autre partie du toit.

Cette disposition permet d'éviter, par exemple, les blocs des feux arrière et donc d'éviter d'allonger le véhicule.

Dans les cas du toit du type décrit dans la demande EP 1 719 654, les éléments latéraux sont introduits par pivotement desdits éléments latéraux autour d'un axe proche de la cloison. Ici les éléments latéraux se prolongent vers l'arrière au-delà du bord arrière du panneau central 3A.

Avantageusement les bords de ces ouvertures 5A, 5B latérales sont conformés pour améliorer la résistance structurelle de la cloison creuse.

Une ouverture 6 dite de manoeuvre est ici prévue centrée pour permettre le passage d'un actionneur. Les bords de cette ouverture pourront être conformés pour participer à la résistance de la cloison.

Peuvent être prévues des ouvertures 7 dites accessoires localisées dans les zones d'appui des dossiers des passagers arrière pour y glisser des objets longs lorsque le dossier est rabattu.. Les bords de ces ouvertures 7 pourront être conformés pour participer à la résistance de la cloison.

De préférence, les bords de toutes les ouvertures sont conformés pour participer à la résistance.

Avantageusement au moins certaines ouvertures ont un contour fermé et de préférence elles ont toutes un contour fermé.

La structure à résistance améliorée est obtenue par assemblage d'une plaque 11 avant et une plaque 12 arrière en regard l'une de l'autre et distante l'une de l'autre et reliées entre elles par des ponts de matière.

Ces plaques sont d'un seul tenant.

Une solution intéressante est de fermer le haut de la cloison par une traverse 13 et de fixer la base des plaques sur le plancher.

Cette traverse peut être obtenue par déformation d'une ou des deux plaques.

Cette matière qui relie les deux plaques résulte par exemple d'une traverse haute ajoutée et d'une traverse basse ajoutée et/ou de déformations de l'une et/ou l'autre des plaques. On obtient ainsi une cloison creuse résistante et allégée. Le fait de faire des ouvertures dans les plaques allège la structure mais le fait de liaisonner les bords X des dites ouvertures par soudures donnent de la résistance.

Pour réaliser la liaison entre les bords des plaques au niveau des contours, on déplace de la matière d'une plaque vers une autre plaque. Soit c'est de la matière provenant d'une seule plaque soit c'est de la matière provenant des deux plaques.

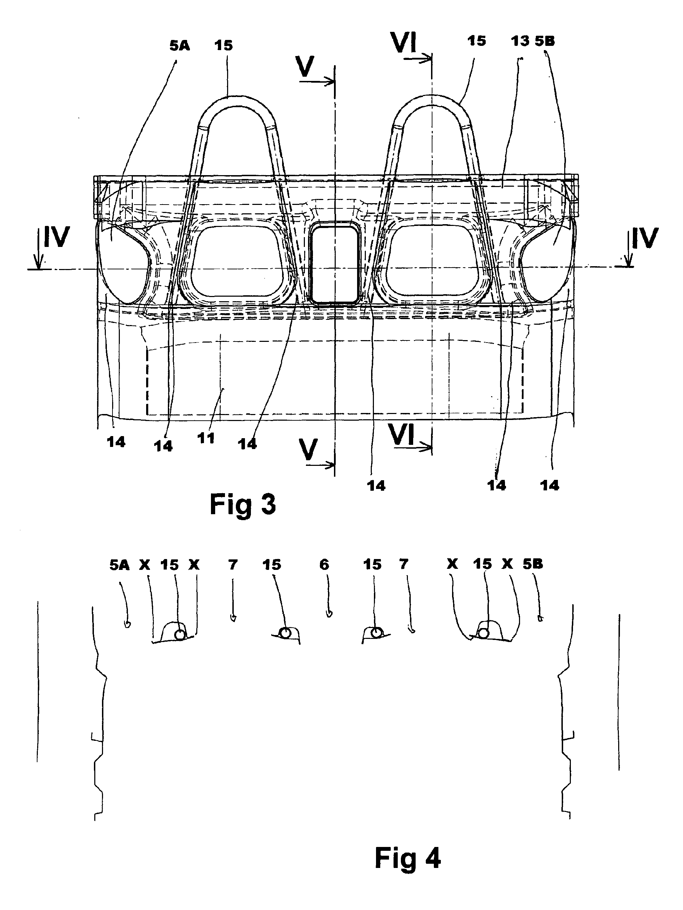

Comme cela apparait à la figure 3, les différentes ouvertures définissent entre elles des jambes 14 verticales pouvant accueillir pour certaines des parties d'arceaux 15 de sécurité.

On voit ici que l'ancrage des arceaux est fait sur approximativement deux tiers de la hauteur dudit arceau.

Sur les coupes des figures 4 à 6, on a fait figurer uniquement les zones matérielles coupées, les zones non coupées n'apparaissent pas en projection.

La figure 4 montre les montants verticaux formés par la liaison des plaques avant et arrière dans les zones de contour des ouvertures.

On aperçoit les branches verticales des arceaux logées dans la cloison creuse.

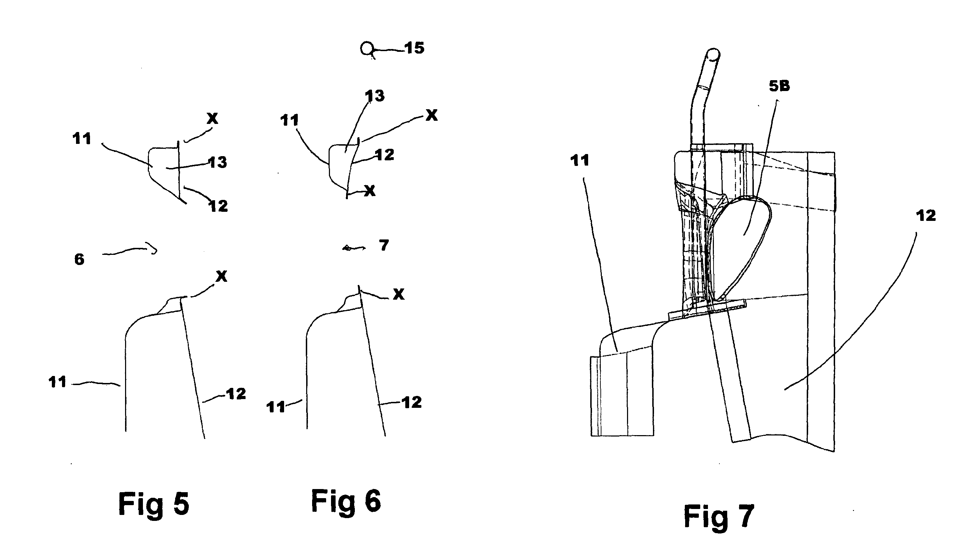

La figure 5 montre la coupe verticale passant par l'ouverture centrale 6. On voit bien en partie supérieure que la cloison forme une traverse 13 haute fermant le haut de la cloison.

La figure 6 montre la coupe verticale passant par une ouverture 7 accessoire. On voit toujours cette traverse creuse haute.

On notera que la cloison s'épaissit vers le plancher en augmentant la distance entre les plaques avant et arrière.

La fabrication d'une telle cloison creuse ayant une fonction de renfort est relativement simple . Elle fait appel à des opérations de type découpage, emboutissage et soudage.

Un avantage c'est qu'en partant de deux plaques d'un seul tenant on a une continuité.

La présence de ces ouvertures disposées transversalement crée des jambes résistantes de part et d'autre de chaque ouverture ces pieds étant reliés à la traverse supérieure ainsi qu'au plancher ou à une autre traverse inférieure ( non représentée).

## Revendications

1. Véhicule à toit rétractable dans un coffre comprenant , d'une part, un élément (2) de toit avant et un élément (3) de toit arrière, cet élément (3) de toit arrière comprenant lui même une partie (3A) centrale et deux éléments latéraux (3B) et, d'autre part, une structure (7) à résistance améliorée en torsion séparant le volume du coffre de celui de l'habitacle et reliant des pieds latéraux (8) du véhicule, ce véhicule étant **caractérisé en ce que** la structure améliorée est une cloison épaisse creuse qui s'étend sensiblement depuis le plancher et présente des ouvertures latérales (5A, 5B) traversées par une partie des éléments latéraux (3B) du toit lorsqu'il est en position rangé dans le coffre.

2. Véhicule à toit rétractable selon la revendication 1 **caractérisé en ce que** la structure améliorée comprend une ouverture (6) dite de manoeuvre pour permettre le passage d'un actionneur.

3. Véhicule à toit rétractable selon la revendication 1 ou 2 **caractérisé en ce que** la structure améliorée comprend des ouvertures (7) dites accessoires localisées dans les zones d'appui des dossiers des passagers arrière pour y glisser des objets longs .

4. Véhicule à toit rétractable selon l'une quelconque des revendications précédentes **caractérisé en ce que** les contours d'au moins les ouvertures latérales sont fermées.

5. Véhicule à toit rétractable selon la revendication 4 **caractérisé en ce que** toutes les ouvertures ont un contour fermé.

6. Véhicule selon l'une quelconque des revendications précédentes **caractérisé en ce que** les bords X d'au moins certaines ouvertures sont conformés pour participer à la résistance de la structure.

7. Véhicule selon l'une quelconque des revendications précédentes **caractérisé en ce que** la structure à résistance améliorée est constitué de deux plaques (11, 12) en regard l'une de l'autre et distante l'une de l'autre reliées par des ponts de matière.

8. Véhicule selon la revendication 7 **caractérisé en ce que** les ponts de matière sont constitués par déformation locale d'au moins une plaque, la dite déformation étant alors soudée sur l'autre plaque.

9. Véhicule selon la revendication 8 **caractérisé en ce que** les déformations de la plaque sont situées autour de certaines des ouvertures.

10. Véhicule selon la revendication 9 **caractérisé en ce que** les déformations sont situées autour de toutes les ouvertures.

11. Véhicule selon la revendication 8 **caractérisé en ce que** les déformations forment une traverse haute (13) reliant des pieds latéraux du véhicule.

12. Véhicule selon l'une quelconques des revendications 7 à 11 **caractérisé en ce que** la structure résistante comprend des jambes (14) de résistance de part et d'autres de chaque ouverture.

13. Véhicule selon la revendication 12 **caractérisé en ce que** les jambes de résistance sont reliées à la traverse supérieure.

14. Véhicule selon l'une quelconque des revendications précédentes **caractérisé en ce que** les éléments latéraux du toit se décalent vers l'avant pour être introduit dans les ouvertures latérales ou se déplacent par pivotement.

15. Véhicule selon la revendication 14 **caractérisé en ce que** les éléments latéraux se décalent vers l'avant vers les ouvertures latérales au moyen d'un mécanisme prenant appui sur les autres parties de toit.
